# EUROPÄISCHE PATENTSCHRIFT

(11) **EP 1 727 707 B1**
(45) Veröffentlichungstag und Bekanntmachung des Hinweises auf die Patenterteilung: **21.07.2010**
(21) Anmeldenummer: 05715220.9
(22) Anmeldetag: 28.01.2005
(51) Int. Cl.: B60N 2/48

(54) **VORRICHTUNG ZUR HALTERUNG EINER KOMPONENTE, INSBESONDERE EINER KOPFSTÜTZE UND INSBESONDERE IN ODER AN EINEM FAHRZEUG**
DEVICE FOR FIXING A COMPONENT IN PARTICULAR A HEADREST AND IN PARTICULAR IN OR ON A VEHICLE
DISPOSITIF DESTINE A SUPPORTER UN ELEMENT, EN PARTICULIER UN APPUIE-TETE ET EN PARTICULIER DANS OU SUR UN VEHICULE

(30) Priorität: 19.03.2004 DE 102004013979
(43) Veröffentlichungstag der Anmeldung: 06.12.2006
(73) Patentinhaber: Johnson Controls GmbH, 51399 Burscheid (DE)
(72) Erfinder: DILLINGER, Thomas, D - 42929 Wermelskirchen (DE)
(74) Vertreter: Wolff, Felix
(86) Internationale Anmeldenummer: PCT/EP2005/000848
(87) Internationale Veröffentlichungsnummer: WO 2005/097546

(56) Entgegenhaltungen:
- EP-A- 0 798 158
- EP-A- 0 953 476
- DE-A1- 19 954 862
- FR-A- 2 756 789
- FR-A- 2 763 293
- FR-A- 2 823 808

## Beschreibung

Die Erfindung betrifft eine Vorrichtung zur Halterung einer Komponente, insbesondere einer Kopfstütze und Insbesondere in oder an einem Fahrzeug, wobei der Komponente wenigstens eine Halterungsstange zugeordnet Ist, wobei die Halterungsstange In einer im wesentlichen parallel ihrer Längserstreckung verlaufenden ersten Richtung relativ zur Vorrichtung verschiebbar ist.

Solche Vorrichtungen sind allgemein bekannt und beispielsweise in der DE 199 54 862 A1 oder in der EP 0 953 476 A1 offenbart. Es gibt nämlich Führungseinrichtungen bzw. Halterungseinrichtungen von Kopfstützen in Kraftfahrzeugen. Solche Halterungs- bzw. Führungseinrichtungen dienen dazu, die insbesondere zwei Führungsstangen, die aus einer gebräuchlichen Kopfstütze, insbesondere zur Höhenverstellung der Kopfstütze herausragen, zu führen bzw. zu arretieren. Es ist nun so, dass bei der Herstellung von jeglichen Komponenten, insbesondere für Kraftfahrzeuge, Maßtoleranzen bzw. Anordnungstoleranzen der verschiedenen Einzelteile der Komponenten auftreten. Im Beispiel einer Kopfstütze als eine Komponente für ein Fahrzeug, insbesondere für ein Kraftfahrzeug, kann es insbesondere vorkommen, dass Halterungsstangen, die sich von der Kopfstütze aus erstrecken und zur Halterung der Kopfstütze bzw. zur Höhenverstellung der Kopfstütze dienen, in geringem Maße nichtparallel angeordnet sind oder auch zu weit bzw. zu nah beabstandet angeordnet sind. Solche Toleranzen führen dann dazu, dass eine Höhenverstellung einer solchen Kopfstütze nur mit vergleichsweise großem Kraftaufwand durch einen Benutzer der Kopfstütze möglich ist. Dies beeinträchtigt insgesamt die Benutzung der Kopfstütze. Anderseits ist es jedoch auch so, dass die Haltestangen von solchen Kopfstützen nicht mit einem zu großen Spiel in den Haltevorrichtungen bzw. in den Führungseinrichtungen gehalten werden dürfen, well sie ansonsten zum einen, beispielsweise bel Vibrationen des Fahrzeuges, anfangen könnten zu klappern bzw. generell sich in einer unerwünschten Welse zu bewegen und andererseits führt eine solche Beweglichkeit in unerwünschter Weise zu einer ästhetischen Beeinträchtigung, well hierdurch die Wertanmutung einer solchen Kraftfahrzeugkomponente verringert wird.

Der Erfindung liegt daher die Aufgabe zu Grunde, eine Vorrichtung zur Halterung einer Komponente, insbesondere eine Kopfstütze und insbesondere in oder an einem Fahrzeug, zu schaffen, die einerseits vergleichsweise leicht höhenverstellbar bzw. generell entlang der Halterungsstangen der Komponente verstellbar ist und zum anderen eine ausreichend stabile Halterung der Komponente ermöglicht.

Diese Aufgabe wird erfindungsgemäß durch eine Vorrichtung zur Halterung einer Komponente gemäß Patentanspruch 1 gelöst. Hierdurch ist es in vorteilhafter Weise möglich, sowohl eine leichte Verschiebbarkeit der Komponente entlang der Handhalterungsstangen zu gewährleisten als auch eine ausreichend feste Halterung der Komponenten, insbesondere gegenüber Vibrationsbewegungen ("Klappern") zu gewährleisten.

Bevorzugt ist ferner, dass das Toleranzausgleichmittel auch während einer Verschiebung der Haltestange in der ersten Richtung relativ zur Vorrichtung in Kontakt mit der Halterungsstange steht. Hierdurch ist gewährleistet, dass in jeglicher Benutzungssituation ein ausreichender Halt und Insbesondere ein ausreichender Vibrationsschutz gegeben ist.

Erfindungsgemäß erfolgt eine Bewegung des Toleranzausgleichmittels in der zweiten Richtung lediglich gegen eine Reibungskraft der Vorrichtung gegenüber dem Toleranzausgleichmittell. Hierdurch ist es möglich, die zwei an sich entgegenstehenden Zielrichtungen einer möglichst stabilen und festen Halterung der Vorrichtung einerseits und einer leichten Verschiebbarkeit der Vorrichtung entlang der Halterungsstangen andererseits dadurch miteinander zu vereinbaren, dass das Toleranzausgleichmittel hinsichtlich des Ausgleichs von Toleranzen der Komponente bzw. der Halterungsstangen der Komponente in einer zur ersten Richtung senkrechten Ebene möglich ist, dass jedoch das Toleranzausgleichmittel derart angeordnet und mit der Vorrichtung verbunden ist, dass das Toleranzausgleichmittel insgesamt gegenüber zufälligen Bewegungen bzw. Vibrationsbewegungen der Halterungsstange bzw. der Komponente eine diese Bewegung behindernde bzw. diese verhindernde Wirkung hat.

Ferner ist bevorzugt, dass das Toleranzausgleichmittel in einer Ebene senkrecht zur ersten Richtung an wenigstens drei Stellen in Kontakt mit der Halterungsstange steht. Dadurch wird in vorteilhafter Weise eine gute Halterung und gute Absicherung der Komponente bzw. der Halterungsstange der Komponente in der Vorrichtung gegen sämtliche auftretende Vibrationsbewegungen und dergleichen gewährleistet.

Weiterhin ist bevorzugt, dass das Toleranzausgleichmittel in einer Ebene senkrecht zur ersten Richtung die Halterungsstange vollständig umschließt. Hierdurch ist das Toleranzausgleichmittel in einfacher Weise als scheibenartige Vorrichtung herstellbar. Im Inneren kann das Toleranzausgleichmittel hierdurch eine an den Querschnitt der Halterungsstange angepaßte Form aufweisen und Außen kann das Toleranzausgleichmittel eine an den Querschnitt der Vorrichtung bzw. an den Aufnahmeort der Vorrichtung, an dem das Toleranzausgleichmittel befestigt ist, annehmen.

Es ist ferner bevorzugt, dass das Toleranzausgleichmittel in der ersten Richtung mittels der Vorrichtung und mittels einer Druckkraft elastisch verformt ist. Auf diese Weise ist die erfindungsgemäße Reibungskraft der Vorrichtung gegenüber dem Toleranzausgleichmittel in einfacher Weise und kostengünstig realisierbar.

Das Toleranzausgleichmittel umfaßt ferner in bevorzugter Weise einen Werkstoff mit niedrigem Reibkoeffizienten, insbesondere im Bereich des Kontakts des Toleranzausgleichmittels mit der Halterungsstange. Hierdurch werden weiter die zur Verstellung der Komponente entlang der Längserstreckung der Halterungsstangen benötigten Kräfte reduziert.

Ferner ist bevorzugt, dass die Vorrichtung eine Führungseinrichtung ist und/oder dass die Komponente zwei Halterungsstangen aufweist. Es ist hierdurch möglich, der Bewegung der Verstellung der Komponente entlang der Längserstreckung der Halterungsstangen bzw. der Stange, d. h. einer Verstellung in der ersten Richtung, eine Führung bzw. eine Bewegung im Raum aufzuerlegen.

Die Erfindung wird nachfolgend anhand von in der Zeichnung dargestellten Ausführungsbeispielen näher erläutert.
- **Figur 1**: zeigt ein Querschnitt durch eine erfindungsgemäße Vorrichtung zur Halterung einer Komponente.
- **Figur2**: zeigt ein Toleranzausgleichmittel.
- **Figur3**: zeigt ein Querschnitt in Richtung der Längserstreckung der Halterungsstangen im Bereich des Toleranzausgleichmittels.
- **Figur4**: zeigt eine schematische Darstellung einer Einbausituation einer in die erfindungsgemäße Vorrichtung eingebaute Komponente.

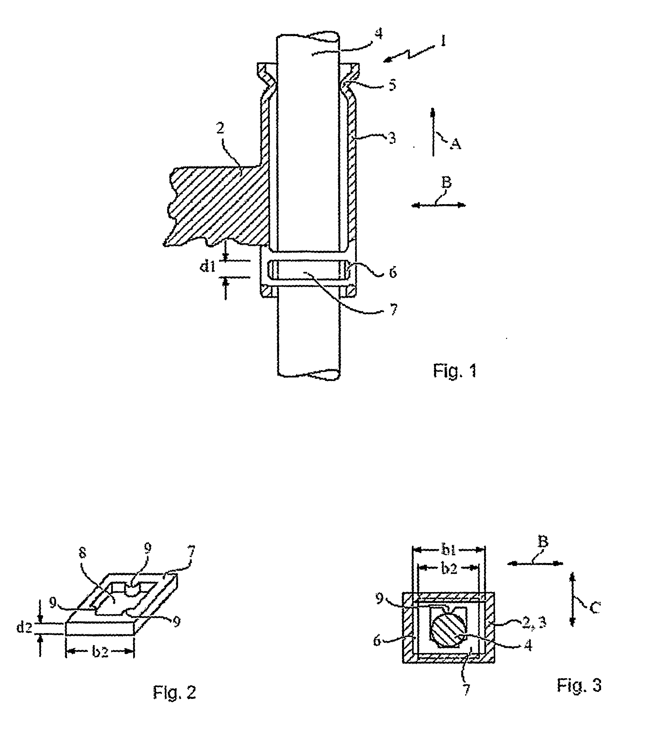

In **Figur1** ist eine Vorrichtung 1 zur Halterung einer Komponente, insbesondere einer Kopfstütze und insbesondere in oder an einem Fahrzeug, dargestellt. Die Vorrichtung 1, die folgenden auch als Führungseinrichtung 1 bezeichnet wird, umfaßt beispielhaft insbesondere einen Grundkörper 2 und einen hülsenartigen Bereich 3. Der hülsenartige Bereich 3 dient der Aufnahme einer Halterungsstange 4 bzw. einer Haltestange 4, die der Halterung bzw. Befestigung der Komponente dient. In einem Teilbereich ihres Grundkörpers 2 weist die Führungseinrichtung 1 eine Ausnehmung 6 auf, die im folgenden auch als Schlitz 6 bezeichnet wird, in der ein Toleranzausgleichmittel 7, dass im folgenden auch als ein Passstück 7 bezeichnet wird, befindlich ist. Die Ausnehmung 6 weist eine Höhe d1 zur Unterbringung des Toleranzausgleichmittels 7 auf.

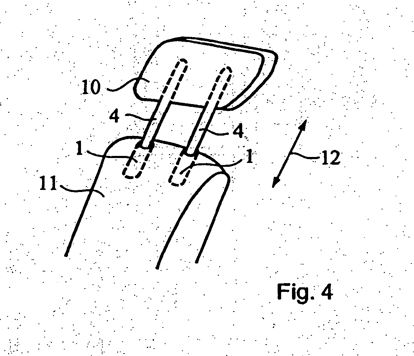

In **Figur 4** ist ein Anwendungsszenario bzw. eine Anwendungssituation der erfindungsgemäßen Vorrichtung 1 dargestellt. An der Rückenlehne 11 eines nicht vollständig dargestellten Sitzes befindet sich eine Kopfstütze 10 als Beispiel einer Komponente 10. Die Kopfstütze 10 ist mittels eines Paars von Haltestangen 4 mit der Rückenlehne 11 des Sitzes verbunden. Die Komponente 10 bzw. die Kopfstütze 10 ist in Richtung des mit dem Bezugszeichen 12 bezeichneten Doppelpfeils verschieblich bzw. höhenverstellbar an der Rückenlehne 11 befestigt. Im in der Figur 4 dargestellten Anwendungsbeispiel ist die Vorrichtung 1 fest mit der Rückenlehne 11 des Sitzes verbunden und es sind die Haltestangen 4 fest mit der Kopfstütze 10 verbunden, so dass eine Höhenverstellung der Kopfstütze 10 relativ zur Rückenlehne 11 durch eine Verschiebung der Haltestangen 4 zusammen mit der Kopfstütze 10 erfolgt. Es kann umgekehrt selbstverständlich auch vorgesehen sein (nicht dargestellt), dass die Vorrichtung 1 in die Kopfstütze integriert ist und dass die Haltestange 4 fest mit der Rückenlehne 11 verbunden sind, so dass eine Höhenverstellbarkeit der Kopfstütze 10 bei feststehenden Haltestangen 4 dadurch realisiert wird, dass die Vorrichtung 1 zusammen mit der höhenverstellbaren Kopfstütze 10 an den Haltestangen 4 entlang bewegt wird.

Die Vorrichtung 1 umfaßt in Ihrem hülsenartigen Bereich 3 erfindungsgemäß bevorzugt an dem der Ausnehmung 6 gegenüberliegenden Ende des hülsenartigen Bereichs 3, wenigstens einen, bevorzugt jedoch eine Mehrzahl von Vorsprüngen 5, durch welche die Anordnung der Vorrichtung 1 relativ zur Haltestange 4 definiert wird. Insbesondere sind die Vorsprünge 5 um die Außenkontur der Haltestange 4 herum verteilt angeordnet. Die Vorsprünge 5 dienen dazu, die Haltestange 4 relativ zur Vorrichtung 1 in definierte Weise anzuordnen.

Das in der Ausnehmung 6 bzw. im Schlitz 6 angeordnete Toleranzausgleichmittel 7 ist in **Figur 2** in perspektivischer Darstellung dargestellt. Das Passstück 7 bzw. das Toleranzausgleichmittel 7 ist mit einer zentralen Ausnehmung 8 und mehreren nach innen ragenden weiteren Vorsprüngen 9 ausgestattet. Die weiteren Vorsprünge 9 liegen, insbesondere in zu den Vorsprüngen 5 ähnlicher Weise, an der Haltestange 4 an. Hierdurch wird an den beiden entgegengesetzten Enden der Vorrichtung 1 eine Fixierung der Vorrichtung 1 gegenüber der Haltestange 4 bzw. umgekehrt eine Fixierung der Haltestange 4 gegenüber der Vorrichtung 1 realisiert, wobei diese Halterung zum einen stabil ist bzw. einen stabilen Halt gibt und zum anderen leichtgängig gegenüber einer in der Figur 1 mit einem Pfeil und dem Bezugszeichen A bezeichneten ersten Richtung ist, welche der Längserstreckung der Haltestangen 4 entspricht bzw. parallel zu dieser verläuft. Sowohl die Vorsprünge 5 als auch die weiteren Vorsprünge 9 sind erfindungsgemäß zur Herbeiführung einer besonders großen Leichtgängigkeit einer Verschiebung der Haltestangen 4 in der ersten Richtung A aus einem Werkstoff mit niedrigen Reibkoeffizienten, wie z. B. Polyoxymethylen (POM) oder Polyamid (PA), gefertigt.

In der Praxis ist es nun jedoch so, dass es Maßtoleranzen bzw. Anordnungstoleranzen der Haltestangen 4 gibt, insbesondere wenn eine einzige Kopfstütze 10 zwei im wesentlichen parallel zueinander verlaufende Haltestangen 4 aufweist. In einem solchen Fall, verlaufen beispielsweise die beiden Haltestangen 4 nicht vollkommen parallel zueinander. Bei einer vollkommen starren Anordnung der Befestigungspunkte der Haltestangen 4 in der Vorrichtung 1, d. h. bei einer fixierten Anordnung der Vorsprünge 5 bzw. der weiteren Vorsprünge 9 in der Anordnung 1 würde es daher aufgrund der Maßtoleranz zu Spannungen kommen, die zu einer Erhöhung des Widerstandes gegenüber einer Verschiebung der Haltestangen 4 in der ersten Richtung A führen. Erfindungsgemäß ist es nun auf überraschend einfache Weise mit dem gegenüber der Vorrichtung 1 verschiebbaren Toleranzausgleichmittel 7 möglich, sowohl eine leichte und einfache Verschiebbarkeit der Haltestangen 4 als auch eine stabile Halterung der Komponente 10 zu gewährleisten. Hierzu ist in der Ausnehmung 6 das Toleranzausgleichmittel 7 in wenigstens einer zur ersten Richtung A im wesentlichen senkrechten zweiten Richtung B (vgl. Figur 1) verschiebbar angeordnet, wobei die Anordnung des Toleranzausgleichmittels 7 in der Vorrichtung 1 derart vorgesehen ist, dass einer Verschiebung in der zweiten Richtung B ein Widerstand entgegengesetzt wird, der bevorzugt aus einer Reibkraft besteht bzw. eine solche umfaßt. Diese Reibungskraft ist mit besonders einfachen Mitteln dadurch realisierbar, dass die Ausnehmung 6 bzw. der Schlitz 6 eine geringere Höhe d1 aufweist, als es der Höhe d2 des Toleranzausgleichmittels 7 entspricht (vgl. Figur 2). Zur Montage des Toleranzausgleichmittels 7 in dem Grundkörper 2 der Vorrichtung 1 ist es daher notwendig, dass das Toleranzausgleichmittel 7 in die Vorrichtung 1 eingepresst wird und dort unter Vorspannung (in der ersten Richtung A) gehalten wird. Es wird daher aufgrund des geringeren Bauraums im Schlitz 6 auf das Toleranzausgleichmittel 7 in der ersten Richtung A eine Druckkraft ausgeübt, was insbesondere zu einer elastischen Verformung des Toleranzausgleichmittels 7 führt. Durch die von der Vorrichtung 1 bzw. ihrem Grundkörper 2 auf das Toleranzausgleichmittel 7 ausgeübte Druckkraft wird eine Reibungskraft realisiert, die einer Verschiebung des Toleranzausgleichmittels 7 im Schlitz 6 entgegenwirkt. Eine solche Verschiebung ist erfindungsgemäß deshalb möglich, weil die Ausnehmung 6 für das Toleranzausgleichmittel 7, wie aus der Figur 3 deutlich wird, eine größere Breite b1 läßt als die Breite b2 des Toleranzausgleichmittels 7 erfordert. Das Toleranzausgleichmittel 7 bzw. das Passstück 7 kann sich daher in der Vorrichtung 1 bzw. in dem Grundkörper 2 der Vorrichtung 1 um die Differenz zwischen der lichten Weite b1 des Schlitzes 6 und der Ausdehnung b2 des Paßstücks 7 in der zweiten Richtung B verschieben. In einer sowohl zur ersten Richtung A als auch zur zweiten Richtung B senkrechten dritten Richtung C (vgl. Figur 3) kann erfindungsgemäß das Gleiche vorgesehen sein, d. h. es existiert eine Beweglichkeit des Toleranzausgleichmittels 7 in beide zur ersten Richtung A senkrechten Richtungen B und C. Es kann jedoch erfindungsgemäß alternativ vorgesehen sein, dass die Beweglichkeit des Toleranzausgleichmittels 7 ausschließlich in der zweiten Richtung B gegeben ist und in der dritten Richtung C nicht gegeben ist. Es ist in diesem Fall dann auch möglich, dass die die Reibungskraft hervorrufende Druckkraft auf das Toleranzausgleichmittel 7 nicht in der ersten Richtung A ausgeübt wird sondern in der dritten Richtung C ausgeübt wird.

In **Figur 3** ist, wie bereits angedeutet, eine Querschnittsdarstellung durch das Toleranzausgleichmittel 7 entlang einer zur ersten Richtung A parallelen Projektionsrichtung dargestellt, wobei das Toleranzausgleichmittel 7, seine weiteren Vorsprünge 9, die Haltestange 4 und der Grundkörper 2 bzw. der hülsenartige Bereich 3 erkennbar ist. Aus der Figur 3 geht auch die lichte Breite b1 des Schlitzes 6 und die Ausdehnung b2 des Toleranzausgleichmittels 7 in der zweiten Richtung B hervor, so dass sicher ist, dass das Toleranzausgleichmittel 7 in der zweiten Richtung B um die Strecke der Differenz zwischen b1 und b2 verschiebbar ist. Hierdurch können Toleranzen, die die Haltestangen 4 in ihrer Anordnung aufweisen, dadurch ausgeglichen werden, dass durch eine solchermaßen kontinuierliche Kraftausübung der Haltestangen 4 auf das Passstück 7 eine Verschiebung des Passstücks 7 gegenüber der Vorrichtung 1 gegen die der nicht dargestellten Reibungskraft bewirkt wird. Anschließend an eine solche Verschiebung ist dann wiederum eine leichte Verschieblichkeit der Haltestangen 4 in der ersten Richtung gegenüber der Vorrichtung 1 möglich. Demgegenüber ist es jedoch bei dem Auftreten von zufälligen Bewegungen bzw. Kräften der Haltestange 4 auf das Toleranzausgleichmittel 7 so, dass einem Klappern bzw. einem Vibrieren der Komponenten 10 durch die Existenz der Reibungskräfte zwischen der Vorrichtung 1 und dem Toleranzausgleichmittel 7 entgegen gewirkt wird. Das Passstück 7 kann sich somit relativ zum Grundkörper 2 in der zur ersten Richtung A senkrechten Ebene verlagern, wobei jedoch ein Klappern des Passstücks 7 im Schlitz 6 durch die Vorspannung verhindert wird.

Der hülsenartige Bereich 3 der Vorrichtung 1 ist erfindungsgemäß derart vorgesehen, dass die Vorsprünge 5 bevorzugt federnd an der Haltestange 4 anliegen. Durch die Möglichkeit einer Verschiebung des Toleranzausgleichmittels 7 führt ein Verschieben der Kopfstütze 10 auf den Haltestange 4 bzw. eine Verschiebung der Haltestangen 4, wobei diese nicht vollkommen parallel zueinander ausrichtet sind, zu einem Verschieben des Passstücks 7 im Schlitz 6, so dass die unvollständige Parallelität der Haltestangen 4 ausgeglichen wird und ein Verklemmen des Grundkörpers 2 bzw. der Vorrichtung 1 auf den Haltestangen 4 vermieden wird.

### Bezugszeichenliste

- 1: Vorrichtung bzw. Führungseinrichtung
- 2: Grundkörper
- 3: hülsenartiger Bereich
- 4: Halterungsstange bzw. Haltestange
- 5: Vorsprung
- 6: Ausnehmung bzw. Schlitz
- 7: Toleranzausgleichmittel bzw. Passstück
- 8: zentrale Ausnehmung
- 9: weiterer Vorsprung
- 10: Komponente bzw. Kopfstütze
- 11: Rückenlehne
- 12: Höhenverstellbarkeit
- A: erste Richtung
- B: zweite Richtung
- d1: Höhe der Ausnehmung
- d2: Höhe des Passstücks
- b1: lichte Breite der Ausnehmung
- b2: Breite des Passstücks

## Patentansprüche

1. Vorrichtung (1) zur Halterung einer Komponente (10), insbesondere einer Kopfstütze (10) und insbesondere in oder an einem Fahrzeug, wobei der Komponente (10) wenigstens eine Halterungsstange (4) zugeordnet ist, wobei die Halterungsstange (4) in einer im wesentlichen parallel ihrer Längserstreckung verlaufenden ersten Richtung (A) relativ zur Vorrichtung (1) verschiebbar ist, wobei die Vorrichtung (1) ein mit der Halterungsstange (4) in Kontakt stehendes Toleranzausgleichmittel (7) aufweist, wobei das Toleranzausgleichmittel (7) in einer im wesentlichen senkrecht zur ersten Richtung (A) verlaufenden zweiten Richtung (B) gegenüber der Vorrichtung (1) verschiebbar ist, **dadurch gekennzeichnet, dass** eine Bewegung des Toleranzausgleichmittels (7),das in einer Ausnehmung (6) angeordnet ist, in der zweiten Richtung (B) lediglich gegen eine Reibungskraft der Vorrichtung (1) gegenüber dem Toleranzausgleichmittel (7) möglich ist, wobei die Reibkraft **dadurch** realisiert ist, dass die Ausnehmung (6) eine geringere Höhe (d1) aufweist als die Höhe (d2) des Tolleranzausgleichsmittels.

2. Vorrichtung (1) nach Anspruch 1, **dadurch gekennzeichnet, dass** das Toleranzausgleichmittel (7) auch während einer Verschiebung der Halterungsstange (4) in der ersten Richtung (A) relativ zur Vorrichtung (1) in Kontakt mit der Halterungsstange (4) steht.

3. Vorrichtung (1) nach einem der vorhergehenden Ansprüche, **dadurch gekennzeichnet, dass** das Toleranzausgleichmittel (7) in einer Ebene im wesentlichen senkrecht zur ersten Richtung (A) an wenigstens drei Stellen in Kontakt mit der Halterungsstange (4) steht.

4. Vorrichtung (1) nach einem der vorhergehenden Ansprüche, **dadurch gekennzeichnet, dass** das Toleranzausgleichmittel (7) in einer Ebene im wesentlichen senkrecht zur ersten Richtung (A) die Halterungsstange (4) vollständig umschließt.

5. Vorrichtung (1) nach einem der vorhergehenden Ansprüche, **dadurch gekennzeichnet, dass** das Toleranzausgleichmittel (7) in der ersten Richtung (A) mittels der Vorrichtung (1) und mittels einer Druckkraft elastisch verformt ist.

6. Vorrichtung (1) nach einem der vorhergehenden Ansprüche, **dadurch gekennzeichnet, dass** das Toleranzausgleichmittel (7) einen Werkstoff mit niedrigem Reibkoeffizienten, insbesondere im Bereich seines Kontakts mit der Halterungsstange (4), umfasst.

7. Vorrichtung (1) nach einem der vorhergehenden Ansprüche, **dadurch gekennzeichnet, dass** die Vorrichtung (1) eine Führungseinrichtung ist.

8. Vorrichtung (1) nach einem der vorhergehenden Ansprüche, **dadurch gekennzeichnet, dass** die Komponente (10) zwei Halterungsstangen (4) aufweist.

## Claims

1. Device (1) for fixing a component (10), in particular a headrest (10) and in particular in or on a vehicle, the component (10) being assigned at least one fixing bar (4), the fixing bar (4) being displaceable relative to the device (1) in a first direction (A) running essentially parallel 1 to its longitudinal extent, the device (1) having a tolerance compensation means (7) which is in contact with the fixing bar (4), and the tolerance compensation means (7) being displaceable in relation to the device (1) in a second direction (B) running essentially perpendicularly to the first direction (A), **characterized in that** a movement of the tolerance compensation means (7), which is arranged in a recess (6), in the second direction (B) is possible only counter to a frictional force of the device (1) in relation to the tolerance compensation means (7), the frictional force being realized by the recess (6) having a lower height (d1) than the height (d2) of the tolerance compensation means.

2. Device (1) according to Claim 1, **characterized in that** the tolerance compensation means (7) is also in contact with the fixing bar (4) during a displacement of the fixing bar (4) relative to the device (1) in the first direction (A).

3. Device (1) according to one of the preceding claims, **characterized in that** the tolerance compensation means (7) is in contact with the fixing bar (4) at at least three points in a plane essentially perpendicular to the first direction (A).

4. Device (1) according to one of the preceding claims, **characterized in that** the tolerance compensation means (7) completely surrounds the fixing bar (4) in a plane essentially perpendicular to the first direction (A).

5. Device (1) according to one of the preceding claims, **characterized in that** the tolerance compensation means (7) is elastically deformed in the first direction (A) by means of the device (1) and by means of a compressive force.

6. Device (1) according to one of the preceding claims, **characterized in that** the tolerance compensation means (7) comprises a material with a low coefficient of friction, in particular in the region of its contact with the fixing bar (4) -

7. Device (1) according to one of the preceding claims, **characterized in that** the device (1) is a guide device.

8. Device (1) according to one of the preceding claims, **characterized in that** the component (10) has two fixing bars (4).

## Revendications

1. Dispositif (1) destiné à supporter une élément (10), notamment un appuie-tête (10), et notamment dans ou sur un véhicule, au moins une tige de support (4) étant associée à l'élément (10), la tige de support (4) pouvant être déplacée dans une première direction (A) s'étendant pour l'essentiel parallèlement à son extension longitudinale par rapport au dispositif (1), le dispositif (1) comportant un moyen de comparaison de tolérance (7) en contact avec la tige de support (4), le moyen de comparaison de tolérance (7) pouvant être déplacé dans une deuxième direction (B) s'étendant pour l'essentiel perpendiculairement à la première direction (A) par rapport au dispositif (1), **caractérisé en ce qu'**un mouvement du moyen de comparaison de tolérance (7), disposé dans un évidement (6), n'est possible dans la deuxième direction (B) que contre une force de frottement du dispositif (1) par rapport au moyen de comparaison de tolérance (7), la force de flottement étant réalisée du fait que l'évidement (6) comporte une hauteur (d1) plus limitée que la hauteur (d2) du moyen de comparaison de tolérance.

2. Dispositif (1) selon la revendication 1, **caractérisé en ce que** le moyen de comparaison de tolérance (7) est en contact avec la tige de support (4), et ce également pendant un déplacement de la tige de support (4) dans la première direction (A) par rapport au dispositif (1).

3. Dispositif (1) selon l'une quelconque des revendications précédentes, **caractérisé en ce que** le moyen de comparaison de tolérance (7) est en contact avec la tige de support (4) en au moins trois endroits dans un plan pour l'essentiel perpendiculaire à la première direction (A).

4. Dispositif (1) selon l'une quelconque des revendications précédentes, **caractérisé en ce que** le moyen de comparaison de tolérance (7) entoure entièrement la tige de support (4) dans un plan pour l'essentiel perpendiculaire à la première direction (A).

5. Dispositif (1) selon l'une quelconque des revendications précédentes, **caractérisé en ce que** le moyen de comparaison de tolérance (7) est déformé dans la première direction (A) à l'aide du dispositif (1) et à l'aide d'une force de pression élastique.

6. Dispositif (1) selon l'une quelconque des revendications précédentes, **caractérisé en ce que** le moyen de comparaison de tolérance (7) comprend un matériau présentant un faible coefficient de frottement, notamment dans la zone de son contact avec la tige de support (4).

7. Dispositif (1) selon l'une quelconque des revendications précédentes, **caractérisé en ce que** le dispositif (1) est un dispositif de guidage.

8. Dispositif (1) selon l'une quelconque des revendications précédentes, **caractérisé en ce que** l'élément (10) comporte deux tiges de support (4).
